# EUROPÄISCHE PATENTANMELDUNG

(11) **EP 0 661 852 A1**
(43) Veröffentlichungstag der Anmeldung: **05.07.1995**
(21) Anmeldenummer: 94119373.2
(22) Anmeldetag: 08.12.1994
(51) Int. Cl.: H04L 27/01, H04L 27/12, H03M 13/00

(54) **Schaltung zum Dekodieren von 2T-vorkodierten Binärsignalen**

(30) Priorität: 17.12.1993 DE 4343252
(71) Anmelder: DEUTSCHE THOMSON-BRANDT GMBH, D-78048 Villingen-Schwenningen (DE)
(72) Erfinder: Scholz, Werner, D-30989 Gehrden (DE)

(57) **Zusammenfassung**

Wenn bei einer derartigen Schaltung die Vorkodierung der Signale nicht durch eine Signalregenerierung rückgängig gemacht ist, muß dieses durch eine zusätzliche Schaltung (Fig. 2) erfolgen. Am Ausgang dieser Schaltung ist eine eindeutige Erkennung des Sync-Musters nicht gewährleistet.

Die Aufgabe besteht darin, eine möglichst einfache Dekodierungsschaltung für 2T-vorkodierte Signale zu schaffen, bei der eine eindeutige Erkennung des Sync-Musters gewährleistet ist.

Die bekannte Schaltung (Fig. 2) mit einem EXOR-Gatter (3) und zwei FlipFlops (2, 6) wird in eine erste und einen zweite Schaltung aufgeteilt, die je ein D-FlipFlop (2, 6) und ein EXOR-Gatter (3, 7) enthalten. Dabei liegt die erste Schaltung am Eingang eines zur Bitmustererkennung dienenden Schieberegisters (4), und die zweite Schaltung ist an einen Abgriff oder an eine Verlängerung des Schieberegisters (4) angeschlossen. Vorzugsweise ist das D-FlipFlop (6) der zweiten Schaltung durch ein D-FlipFlop des Schieberegisters (4) gebildet. Das Schieberegister (4) wird dadurch zusätzlich zum Laufzeitausgleich für das dekodierte Signal ausgenutzt.

Insbesondere Dekodierschaltung für einen Videorecorder mit digitaler Signalaufzeichnung

## Beschreibung

Die Erfindung geht aus von einer Schaltung gemäß dem Oberbegriff des Anspruchs 1. Eine derartige Schaltung ist bekannt durch die DE-OS 41 12 856.

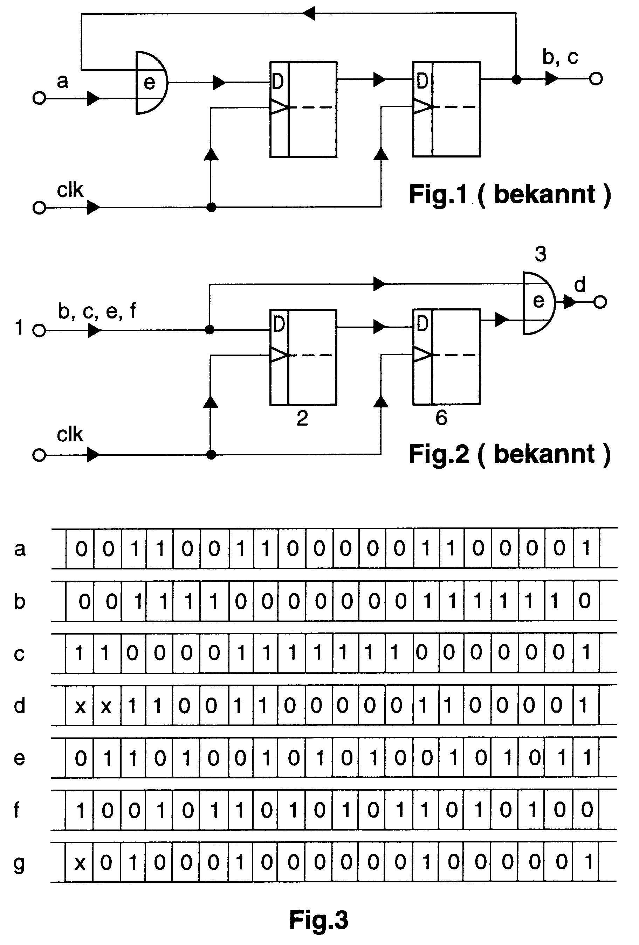

Bei der Aufzeichnung von Signalen und Daten wird eine hohe Speicherdichte angestrebt, um möglichst große Signalmengen auf einer vorgegebenen Speicherfläche unterzubringen. Das gilt besonders für die digitale Videoaufzeichnung. Ein Mittel zur Erhöhung der effektiven Speicherdichte ist die Verwendung möglichst redundanzarmer Aufzeichnungscodes, bei denen allerdings starke tieffrequente Spektralanteile und große Runlength-Werte in Kauf genommen werden müssen. Bei der Wiedergabe derartiger Signale von einem Magnetband wird heute meist die Partial-Response-Class IV-Entzerrung (PR4) in Verbindung mit einem Maximum-Likelihood-Detector, z.B. vom Viterbi-Typ, angewendet. Diese Detektionsmethode liefert zusammen mit dem PR4-Kanal ein gegenüber der Aufzeichnung systematisch verändertes Binärsignal. Die Wiederherstellung des aufgezeichneten Bitmusters ist mit der in Fig. 1 dargestellten bekannten Schaltung durchführbar. Da es sich hier um eine rekursive Schaltung handelt, führt ein einziges falsches Bit zu einer unendlichen Fehlerfortpflanzung. Daher ist es üblich, die in Fig. 1 dargestellte Schaltung mit einem EXOR-Gatter und zwei D-FlipFlops als Vorkodierer (2T-Precoder) zu verwenden. Dadurch wird das aufgezeichnete Bitmuster so verändert, daß am Ausgang des PR4-Kanals das ursprüngliche Bitmuster entsteht. T bedeutet dabei die Periodendauer des Bittaktes clk.

Wenn bei der Wiedergabe eines mit 2T-Vorkodierung aufgezeichneten Signals Entzerrungs- bzw. Detektionsschaltungen angewendet werden, die das Aufzeichnungssignal liefern, dann muß die Vorkodierung nachträglich mit der in Fig. 2 dargestellten, ebenfalls bekannten Schaltung mit einem EXOR-Gatter 3 und zwei D-FlipFlops 2,6 rückgängig gemacht werden. Regenerierungsschaltungen, die für redundanzarme Aufzeichnungen geeignet sind und das Aufzeichnungssignal liefern, sind z.B. in der DE-OS 4112856 beschrieben.

Da die Fehlerfortpflanzung der in Fig. 2 angegebenen Schaltung auf 2 Bit beschränkt ist, ist die Anwendung auf der Wiedergabeseite zulässig. Ein Nachteil der Schaltung besteht darin, daß die Bitmustererkennung am Ausgang der Schaltung nicht eindeutig ist, d.h. verschiedene Bitmuster am Eingang der Schaltung können das gesuchte Bitmuster am Ausgang der Schaltung erzeugen. Bei der Aufzeichnung erzeugt das Bitmuster a gemäß Fig. 3 am Ausgang des 2T-Vorkodierers das Bitmuster b oder c, sofern die beiden FlipFlops des Vorkodierers am Beginn des Bitmusters jeweils auf 0,0 oder 1,1 eingestellt werden. Die Signale b und c sind z.B. die vereinbarten Synchronmuster des aufgezeichneten Signals. Beide Muster ergeben am Ausgang der in Fig. 2 dargestellten Schaltung das Muster d, das bis auf 2 Bit mit dem ursprünglichen Muster a übereinstimmt. Das Muster d wird aber auch durch die Bitmuster e und f erzeugt. Dieses kann zu Schwierigkeiten bei der Blocksynchronisierung des Wiedergabesignals führen.

Der Erfindung liegt die Aufgabe zugrunde, eine möglichst einfache Dekodierungsschaltung für 2T-vorkodierte Signale zu schaffen, bei der dieser Nachteil vermieden wird. Diese Aufgabe wird durch die im Anspruch 1 angegebene Erfindung gelöst. Vorteilhafte Weiterbildungen der Erfindung sind in den Unteransprüchen angegeben.

Bei der Erfindung wird somit zum Rückgängigmachen der 2T-Vorkodierung die Schaltung gemäß Fig. 2 in eine erste und eine zweite Schaltung aufgeteilt, die je ein D-FlipFlop und ein EXOR-Gatter enthalten, wobei die erste Schaltung am Eingang des zur Bitmustererkennung dienenden Schieberegisters liegt und die zweite Schaltung an einen Angriff oder an eine Verlängerung des Schieberegisters angeschlossen ist. Das D-FlipFlop der zweiten Schaltung kann durch ein D-FlipFlop des Schieberegisters gebildet sein. Das Schieberegister kann zusätzlich zum Laufzeitausgleich für das dekodierte Signal ausgenutzt werden.

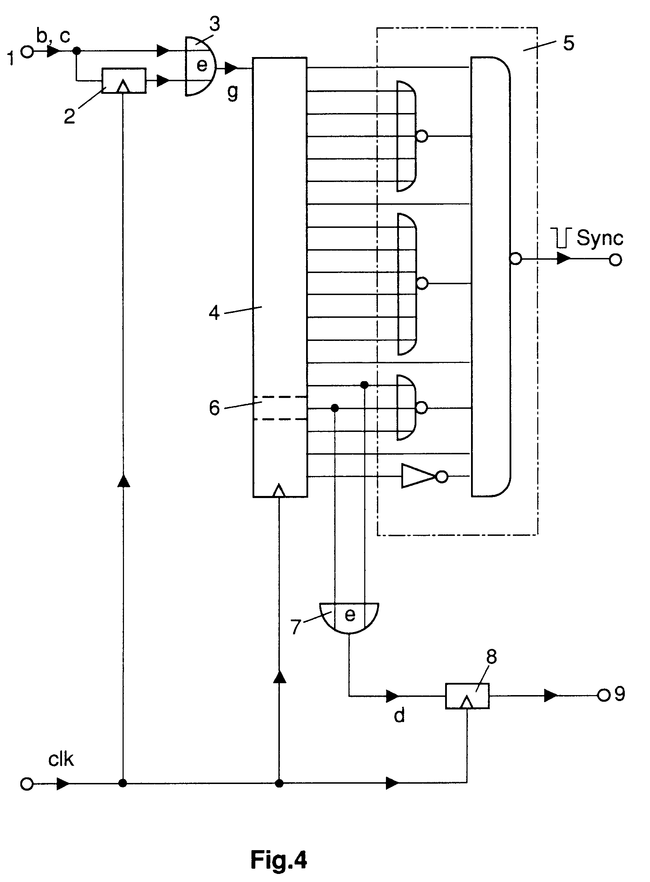

Die Erfindung wird im folgenden anhand der Figuren 3 und 4 der Zeichnung näher beschrieben. Dabei zeigen die kleinen Buchstaben a bis g in Fig. 3 und 4, welche Bitfolgen der Fig. 3 an den einzelnen Punkten in Fig. 4 stehen.

Die am Eingang 1 angeordnete Schaltung mit einem D-FlipFlop 2 und einem EXOR-Gatter 3 erzeugt aus dem Eingangssignal b oder c das Signal g. Das Bitmuster g kennzeichnet im Gegensatz zum Bitmuster d eindeutig die in Fig. 3 angegebenen Bitmuster b und c, die die vereinbarten Synchronmuster des aufgezeichneten Signals darstellen. Das Schieberegister 4 dient zusammen mit der Gatteranordnung 5 zur Erkennung des Bitmusters g. Das zweite EXOR-Gatter 7 ist an zwei benachbarte Angriffe des Schieberegisters 4 angeschlossen. Es liefert an seinem Ausgang das ursprüngliche nicht vorkodierte Signal a bzw. d, das über das FlipFlop 8, das zusammen mit allen anderen FlipFlops der Schaltung mit dem Bittakt clk getaktet ist, dem Ausgang 9 zugeführt wird. Durch Wahl der Angriffe für das EXOR-Gatter 7 kann die Laufzeit des Signals am Ausgang 9 dem Zeitpunkt des Auftretens des Synchronimpulses am Ausgang der Gatterschaltung 5 angepaßt werden. Das Schieberegister 4 kann zu diesem Zweck auch verlängert, oder das FlipFlop 8 durch ein Schieberegister ersetzt werden. Die Aufteilung der zur Aufhebung der 2T-Vorkodierung erforderlichen Schaltung gemäß Fig. 2 bewirkt nicht nur die eindeutige Erkennbarkeit der aufgezeichneten Synchronmuster b und c, sondern ermöglicht es auch, das zur Mustererkennung erforderliche Schieberegister 4 gleichzeitig für den Laufzeitausgleich des dekodierten Signals zu auszunützen.

## Patentansprüche

1. Schaltung zur Dekodierung von 2T-vorkodierten Binärsignalen, deren Vorkodierung nicht durch eine Signalregenerierung rückgängig gemacht ist, und zum Erkennen bestimmter Bitmuster, wie Synchronsignalen, **dadurch gekennzeichnet**, daß die zum Rückgängigmachen der 2T-Vorkodierung erforderliche Schaltung, die aus zwei D-FlipFlops (2, 6) und einem EXOR-Gatter (3) besteht (Fig. 2), in eine erste und eine zweite Schaltung aufgeteilt ist, die je ein D-FlipFlop (2 bzw. 6) und ein EXOR-Gatter (3 bzw. 7) enthalten, daß die erste Schaltung (2, 3) am Eingang eines zur Bitmustererkennung erforderlichen Schieberegisters (4) liegt und die zweite Schaltung (6, 7) an einen Angriff oder an eine Verlängerung des Schieberegisters (4) angeschlossen ist.

2. Schaltung nach Anspruch 1, **dadurch gekennzeichnet**, daß das D-FlipFlop der zweiten Schaltung (6, 7) durch ein D-FlipFlop (6) des Schieberegisters (4) gebildet ist.

3. Schaltung nach Anspruch 1, **dadurch gekennzeichnet**, daß das Schieberegister (4) zusätzlich zum Laufzeitausgleich für das dekodierte Signal (d) ausgenutzt ist.
